# EUROPEAN PATENT APPLICATION

(11) **EP 1 424 626 A2**
(43) Date of publication of application: **02.06.2004**
(21) Application number: 03103964.7
(22) Date of filing: 24.10.2003
(51) Int. Cl.: G06F 3/033, G06F 15/02

(54) **Graph paper mode for a computer device**

(30) Priority: 29.10.2002 US 282565
(71) Applicant: TEXAS INSTRUMENTS INCORPORATED, Dallas, Texas 75265 (US)
(72) Inventor: Koont, Eren S., Dallas 75254 (US)
(74) Representative: Holt, Michael

(57) **Abstract**

A software user interface and method for a computing device 100 to allow a user to graph a function or data plot 132. The user can configure the graph paper and input data points 130 with an input device such as a stylus. This methodology allows the user to create a plot 136 as opposed to the device generating the plot more automatically. The user interface is pedagogically closer to a pencil and paper approach to learning. The student user is able to analyze the relationships of the plotted data using mathematics software after creating a plot in a more traditional manner. An embodiment of the present invention is an application program on a handheld calculator or other computer. Other embodiments of the invention are directed to a user interface for a calculator or other handheld computing device.

## Description

### FIELD OF THE INVENTION

This invention relates to electronic computing devices and software on those devices, and more particularly to a hand held computing device and a software application therefor which provides a user interface.

### BACKGROUND OF THE INVENTION

Electronic calculators and computers have become a common tool for teaching students mathematics. In particular, the advantages of graphing calculators are being utilized in the classroom. Graphing calculators are characterized by a larger screen, which permits the entry of mathematical objects in a logical format. They also permit graph displays and table displays. They have sophisticated programming capability. They often permit data transmission to other computing devices, directly or via a data storage medium, as well as data collection via various interface protocols.

Particular calculator models are often designed for particular educational levels. For example, a calculator for middle school students might have less advanced features than one designed for older students. However, regardless of the level for which a calculator is designed, a continual goal in designing them is to provide a logical and easy to use interface.

Prior art graphing calculators allow the user to graph a function from a mathematical formula or from a set of data points in a table. These prior art devices do not facilitate the student in creating a graph in a manner like using a pencil and paper.

### SUMMARY OF THE INVENTION

The present invention allows a user of a handheld computing device to graph by hand a function or data plot. The user can configure the graph paper and input data points with an input device such as a stylus. This methodology allows the student to create for themselves a plot as opposed to the device generating the plot more automatically. The user interface for making the plot is pedagogically closer to a pencil and paper approach to learning. The student is able to analyze the relationships of the plotted data using mathematics software after creating a plot in a more traditional manner.

An embodiment of the present invention is an application program on a handheld calculator or other computer. Other embodiments of the invention are directed to a user interface for a calculator or other handheld computing device.

### BRIEF DESCRIPTION OF THE DRAWINGS

FIGURE 1 illustrates a hand-held computer device incorporating the features of an embodiment of the present invention.
FIGURES 2a-d illustrate setting the x and y axis in the graph paper mode according to an embodiment of the present invention.
FIGURE 3 illustrates making a plot of points in the graph paper mode according to an embodiment of the present invention.
FIGURE 4 illustrates making a line in the graph paper mode according to an embodiment of the present invention.
FIGURE 5 illustrates a list of points after defining a function using the graph paper mode according to an embodiment of the present invention.

### DETAILED DESCRIPTION OF THE INVENTION

The present invention allows a user of a handheld computing device to graph by hand a function or data plot. The user can configure the graph paper and input data points with an input device such as a stylus. The user interface for making the plot is pedagogically closer to a pencil and paper approach to learning, while still allowing a student user to analyze the relationships of the plotted data using mathematics software after creating a plot.

An embodiment of the present invention is a graph paper mode or a graphing extension of a graphing calculator application (like function, polar, etc.). This mode is particularly useful for students learning the concept of function graphing and data plotting. In this mode, a student user can draw or plot by hand a function using the stylus. In this mode, the user will additionally still have full access to graphing calculator functions (curve fitting, tracing, etc).

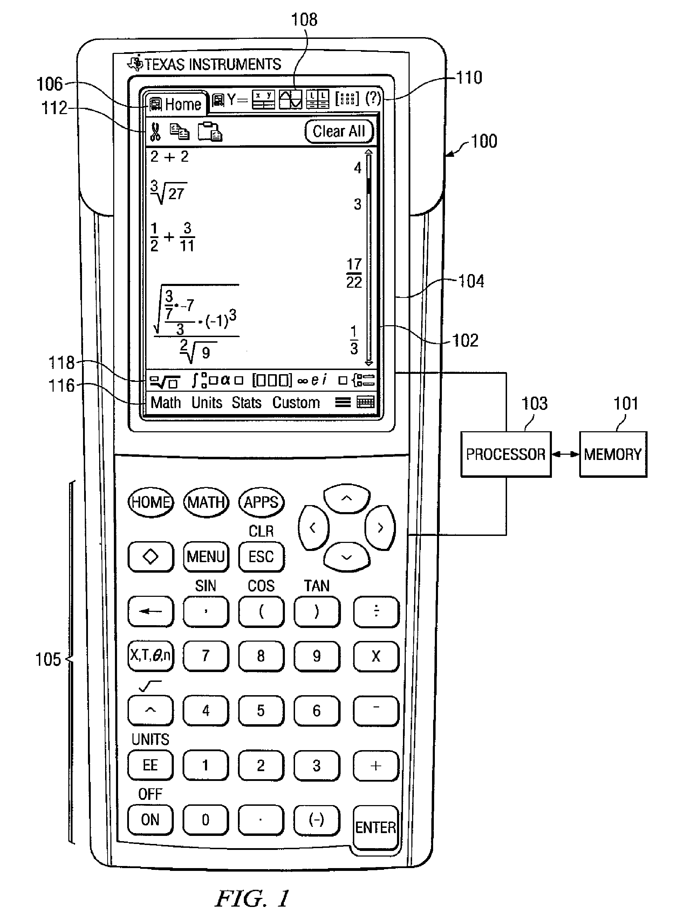

Figure 1 illustrates a computer or hand held computing device 100 that incorporates features of the present invention. The device executes software described herein stored in memory 101 on the processor 103. The device has a display screen 102 having a display area 104. In this embodiment, the display is a touch sensitive display that uses a stylus for input (not shown) as well as the keyboard 105.

The display includes a header button bar 106 that shows the current tool (in this case the calculator tool "Home" screen). The header button bar has several icons to bring up different calculator tools. The graph mode is activated by selecting the graph mode icon 108 on the header button bar 106. The header button bar also has a help function activated by the question mark icon 110. An edit button bar 112 has icons for various edit functions. The display area 104 also has a bottom button bar 114 that has the calculator mode options. In addition, the bottom button bar shows a keyboard icon 116 to bring up a "QWERTY" keyboard on the display for input of characters with the stylus. The display area 104 further includes a second bottom button bar 118 that options for the selected mode of the display area. In the illustrated mode, the bottom button bar 118 has various math problem patterns. The selected mode option illustrated in Figure 1 is the calculator history display for the basic calculator mode.

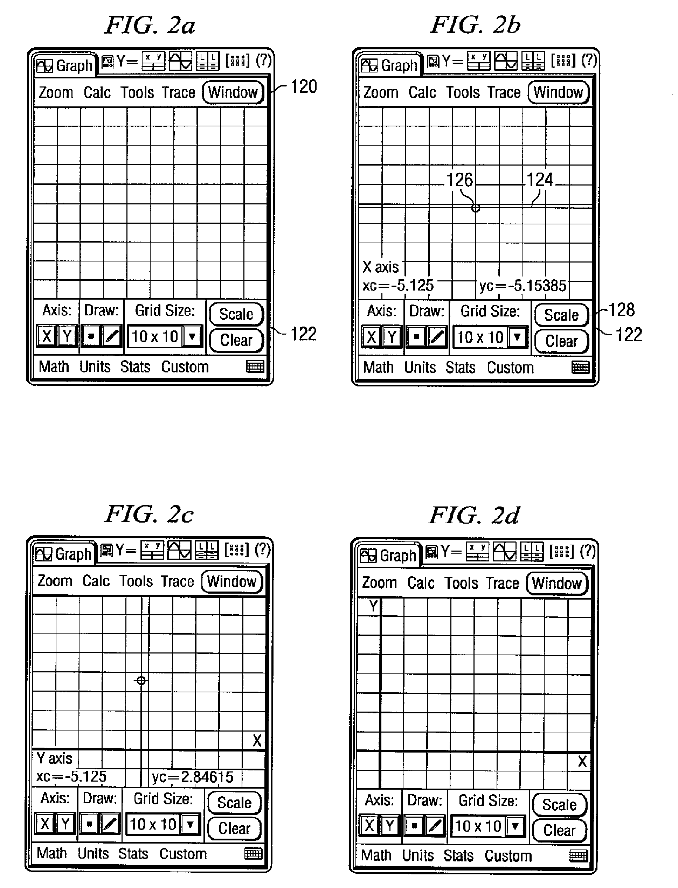

Figure 2a illustrates the display screen of the calculator shown in Figure 1 after activating the graph paper mode. The regular graph mode of the calculator displays graphically any functions entered in the function editor (not shown) by the user. An embodiment of the present invention is the added functionality of a graph paper mode added to the graph mode of the graphing calculator or graphing function of a computer application. When the user activates the graph paper mode, the screen will default to a blank graph paper with a 10×10 grid as shown in Figure 2a. The graph paper mode has a modified top tool bar 120. The top tool bar includes zoom, calc, tools, trace and window buttons. In the displayed embodiment of the present invention, the graph paper functions are on the bottom of the screen in a graph paper menu 122. The graph paper functions on the menu 122 include the following button items: x-axis, y-axis, x-scale, y-scale, draw point, draw pen, clear paper, and grid.

The "x axis" and "y axis" buttons on the graph paper menu 122 allow the user to position the x-axis and y-axis on the display area. For example, after selecting the x-axis button on the graph paper menu 122, the display screen would appear as shown in Figure 2b. The horizontal line 124 represents the new x-axis to be placed on the graph. The user can place the x-axis at any horizontal line by tapping on one of the horizontal lines in the grid, or by dragging the target point 126 on the new x-axis. Similarly, the y-axis can be positioned as shown in Figure 2c. The resulting placement is shown in Figure 2d.

Again referring to Figure 2d, the "scale" button 128 on the graph paper menu 122 allows the user to set the horizontal and vertical length of each side of the grid respectively. Upon activation, a dialog box (not shown) opens to allow the user to key in a value for the grid length. Typically, the default for the scale is 1.

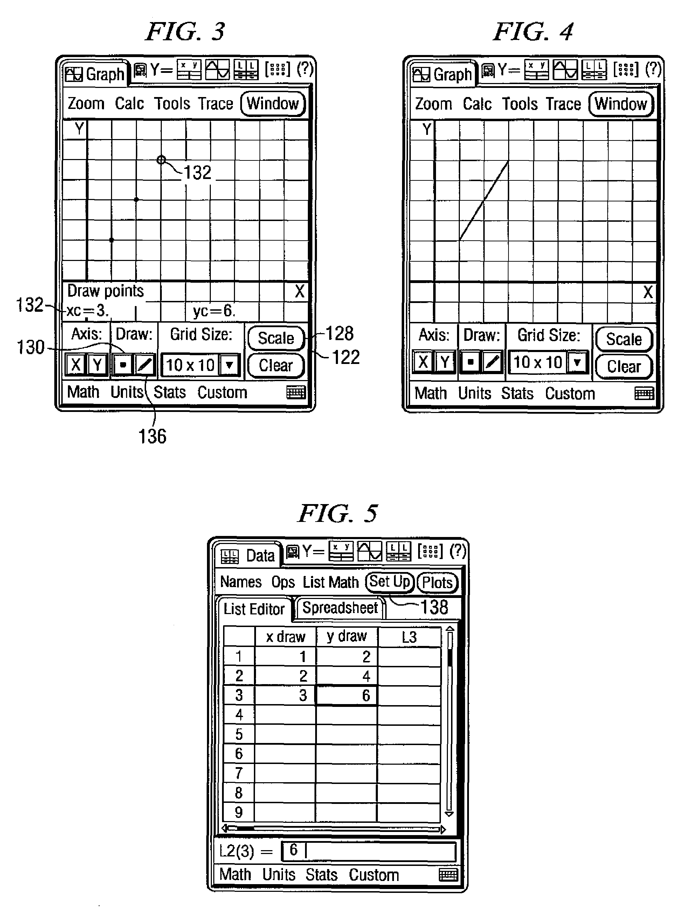

Another feature of the graph paper mode is "draw point." After selecting the draw point button 130 on the graph paper menu 122, wherever the user taps on the grid, a point will appear on the graph paper. Figure 3 shows the draw point feature after the user has taped two points on the grid, and positioned the cursor for a third point 132. The location of the cursor 134 is shown at the bottom of the screen as x and y coordinates 134. Lists are generated by the draw point function and the coordinate of each point is copied to the lists as described below.

An additional feature of the graph paper mode is "draw line," which allows the user to draw a line on the graph that can be used in mathematical operations. After selecting the draw line button 136 on the graph paper menu 122, the user taps on the grid to identify the two endpoints of a line. Figure 4 shows the draw line feature after the user has taped two points on the grid to identify the line. Two lists are generated by the draw line functions (Xdraw and Ydraw). In a preferred embodiment, each instance of the draw is treated as a set of points (for tracing, curve fitting). Further, only one draw line is allowed at a time. When the user taps draw line again, the first set of data is deleted.

Another feature of the graph paper mode is "grid." After selecting the grid button on the graph paper menu 122, the user can select the number of grid lines to show on the display with the current grid scale. After selecting the grid size button on the graph paper menu 122, a dialog box of choices for grid dimensions appears. In the preferred embodiment, the choices are: 5x5, 10×10, 15×15, 20×20, and 25x25. The default is 10×10. If the user chooses to use zoom features while in graph paper mode, then the scale of the grid and the number of grid lines will be updated automatically according to the size of grid chosen.

As described above with reference to a preferred embodiment, when the user first creates a point, two lists are automatically generated (Xdraw and Ydraw). The X coordinate of the point is copied to X list and the Y coordinate is copied to the Y list for each point created. The points are entered into the lists in the order they were created. The two lists Xdraw and Ydraw can then be displayed in a spreadsheet type application and used in other prior art functions common on calculators and math software. Figure 5 shows a list editor function with the xdraw and ydraw lists of data for the points selected in Figure 3. The xdraw and ydraw lists are displayed in this embodiment by selecting these lists from the setup menu 138. The xdraw and ydraw lists are available to the user to perform statistical analysis on the data points, find a best fit line for the data, model a function to the data, or perform other mathematical operations available on the computer device for list data.

When the illustrated embodiment graphing calculator is in graph paper mode, the user will be able to enter Functions and Plots to be plotted on the graph paper. In the preferred embodiment, only functions and plots are allowed in Graph Paper Mode.

The features that are the subject of the present invention could be incorporated into other into other computer based teaching tools and computers. Similarly, other embodiments include the same user interface functionality in a ROM software application package that is executed on a computer, graphing calculator or other handheld device.

Although the present invention has been described in detail, it should be understood that various changes, substitutions, and alterations could be made hereto without departing from the scope of the invention as defined by the appended claims.

## Claims

1. A handheld computing device comprising:
a display screen;
an input device for operating the computing device and entering user responses;
a processor for executing programming that provides a user interface to a graphing software application wherein the user interface further comprises:
a display area on the display screen;
a graph paper area inside the display area,
an input from an input device which allows the user to manually enter data points on the graph paper area, and
wherein the manually entered data points are then available to the mathematical functions of the computer software to analyze the data.

2. The handheld computing device of Claim 1, wherein the manually entered data points comprise a mathematical function.

3. The handheld computing device of Claim 1, wherein the manually entered data points comprise a mathematical function of a line on the graph paper area.

4. The handheld computing device of any one of Claims 1 to 3, wherein the user interface further allows the user to define the graph paper area with x-axis and y-axis location.

5. The handheld computing device of any one of Claims 1 to 4, wherein the user interface further allows the user to define the graph paper area with a coordinate scale.

6. A software program stored on a computer media for a handheld computer device which provides a user interface comprising:
a display area;
a graph paper area inside the display area,
an input from an input device which allows the user to manually enter data points on the graph paper area, and
wherein the manually entered data points are then available to the mathematical functions of the computer software to analyze the data.

7. The software program of Claim 6, wherein the manually entered data points comprise a mathematical function.

8. The software program of Claim 6, wherein the manually entered data points comprise a mathematical function of a line on the graph paper area.

9. The software program of any one of Claims 6 to 8, wherein the user interface further allows the user to define the graph paper area with x-axis and y-axis location.

10. The software program of any one of Claims 6 to 9, wherein the user interface further allows the user to define the graph paper area with a coordinate scale.
